Europäisches Patentamt

European Patent Office

Office européen des brevets

(19)

(11) Numéro de publication : **0 506 540 A1**

# DEMANDE DE BREVET EUROPEEN

(12)

(21) Numéro de dépôt : 92400787.5

(22) Date de dépôt : 24.03.92

(51) Int. Cl.⁵ : **B60S 1/34**

(30) Priorité : 29.03.91 FR 9103840

(43) Date de publication de la demande :
**30.09.92 Bulletin 92/40**

(84) Etats contractants désignés :
**DE ES GB IT**

(71) Demandeur : **VALEO SYSTEMES D'ESSUYAGE**
**11, rue Faraday**
**F-78180 Montigny-Le-Bretonneux (FR)**

(72) Inventeur : **Gagneux, Georges**
**49, rue du Chevalier de Ternay**
**F-86100 Chatellerault (FR)**

(74) Mandataire : **Gamonal, Didier**
**Société VALEO Service Propriété Industrielle**
**30, rue Blanqui**
**F-93406 Saint-Ouen Cédex (FR)**

(54) **Dispositif de lave-glace, notamment pour véhicule automobile.**

(57)    Un dispositif de lave-glace comporte un arbre d'entraînement (2) présentant un canal (42) débouchant à étanchéité par l'extrémité (46) de cet arbre dans une cavité (12) reliée par une tubulure (30) d'admission de fluide de lave-glace, cette cavité (12) faisant partie d'un pot (10) dans lequel pénètre l'arbre (2).

Selon l'invention, l'étanchéité est constituée de deux bagues d'étanchéité (48,50) logées à distance l'une de l'autre dans le pot (10)

FIG.1

EP 0 506 540 A1

La présente invention se rapporte à un dispositif de lave-glace, notamment pour véhicule automobile.

Un dispositif connu de lave-glace, notamment celui décrit dans le document FR-A-2 497 745, se compose d'un groupe de commande, généralement un moto-réducteur constitué d'un moteur électrique associé à un ensemble réducteur permettant de générer à un arbre de sortie lié à ce moto-réducteur un mouvement de rotation alternatif.

L'arbre de sortie est généralement relié soit directement, soit indirectement, tel que par un mécanisme à bielle d'entraînement, à un bras d'essuie-glace portant un balai d'essuie-glace adapté à essuyer une surface vitrée, telle qu'un pare-brise de véhicule automobile.

Cet arbre de sortie, servant d'arbre de commande du bras d'essuie-glace, est relié à l'une de ses extrémités au bras d'essuie-glace et traverse, à étanchéité à l'autre de ses extrémités, le couvercle de fermeture de l'ensemble réducteur et comporte un alésage longitudinal coaxial dont l'une des embouchures, celle à proximité de l'extrémité de l'arbre de commande relié au bras, est raccordée par une conduite souple à un gicleur disposé à proximité du pare-brise et dont l'autre embouchure se situe au voisinage de l'extrémité de l'arbre de commande qui pénètre, à étanchéité, dans un élément en forme de pot reposant de manière fixe sur le couvercle de fermeture de l'ensemble réducteur et présentant une tubulure d'admission qui est raccordée par des conduites souples à un bocal de lave-glace par l'intermédiaire d'une pompe de lave-glace.

Selon le document précité, l'arbre de commande traverse une première bague d'étanchéité portée par le couvercle de fermeture en permettant d'assurer l'étanchéité entre le lubrifiant présent dans l'ensemble réducteur et le pot et cet arbre de commande porte dans une rainure prévue à son extrémité pénétrant dans le pot une deuxième bague d'étanchéité permettant d'assurer l'étanchéité entre le fluide de lave-glace pénétrant dans celui-ci et ledit arbre.

Ce dispositif présente néanmoins certains inconvénients non négligeables pouvant entraver gravement son fonctionnement.

En effet, lors du montage, le couvercle de fermeture, portant la première bague d'étanchéité et le pot, est amené à coiffer l'extrémité de l'arbre de commande portant la deuxième bague d'étanchéité.

Lors de ce mouvement, la première bague d'étanchéité vient glisser le long de l'arbre de commande en passant sur la deuxième bague d'étanchéité portée par cet arbre.

Lors de ce glissement, les deux bagues d'étanchéité viennent en contact l'une avec l'autre et il peut se produire un démontage de l'une de ces bagues sous l'action de l'autre, démontage que l'opérateur ne peut pas constater après montage final et qui, lors du fonctionnement du dispositif, n'assure plus l'étanchéité demandée et peut entraîner soit l'introduction de liquide de lave-glace dans le système réducteur, soit l'introduction de lubrifiant dans le circuit de liquide de lave-glace, ces introductions risquant d'entraver gravement voire détériorer le fonctionnement de ce dispositif.

En outre, il a été constaté que, en fonctionnement, le système réducteur générait une dépression à l'intérieur du volume comportant les divers éléments de ce système, cette dépression agissant sur la première bague d'étanchéité portée par le couvercle en faisant en sorte que l'étanchéité n'était plus assurée entre le couvercle et l'arbre et le lubrifiant présent dans le système réducteur parvenait dans le pot porté par la plaque de fermeture.

Cette introduction de lubrifiant se mélangeant avec le liquide de lave-glace est ensuite projeté par le gicleur sur le pare-brise en entravant gravement le fonctionnement du balai d'essuie-glace et en gênant la visibilité du conducteur.

La présente invention se propose de rémédier aux inconvénients ci-dessus mentionnés en présentant un dispositif dans lequel l'étanchéité est assurée parfaitement, d'une part entre le couvercle de fermeture et l'arbre et, d'autre part, entre l'arbre et le pot que porte ce couvercle de fermeture.

Selon la présente invention, un dispositif d'essuie-glace, notamment pour surface vitrée de véhicule automobile, comportant un arbre de commande portant un canal et dont l'une de ses extrémités pénètre à étanchéité dans un élément en forme de pot de manière à mettre en communication l'embouchure dudit canal avec une tubulure d'admission de fluide de lave-glace portée par ledit pot est caractérisé en ce que l'étanchéité est constituée de deux bagues d'étanchéité logées à distance l'une de l'autre dans le pot.

Grâce à l'invention, lors du montage, les deux bagues étant logées sur la même pièce, ne peuvent pas venir en contact l'une de l'autre et ainsi être démontées.

Selon une autre caractéristique avantageuse de l'invention, un passage de dépression est prévu entre les deux bagues d'étanchéité.

Ainsi, en cas de dépression dans le système réducteur, un équilibre est effectué par communication de l'intérieur de ce système réducteur avec la pression atmosphérique.

Les autres caractéristiques et avantages de l'invention vont ressortir maintenant de la description qui va suivre en se référant aux dessins annexés sur lesquels :

    – la figure 1 est une vue en coupe longitudinale selon la ligne AA de la figure 2 d'un dispositif de lave-glace selon la présente invention ;

    – la figure 2 est une vue en coupe selon la ligne BB de la figure 1 ;

    – la figure 3 est une vue en coupe montrant une variant de réalisation de l'invention ;

– la figure 4 est une vue en coupe selon la ligne CC de la figure 3.

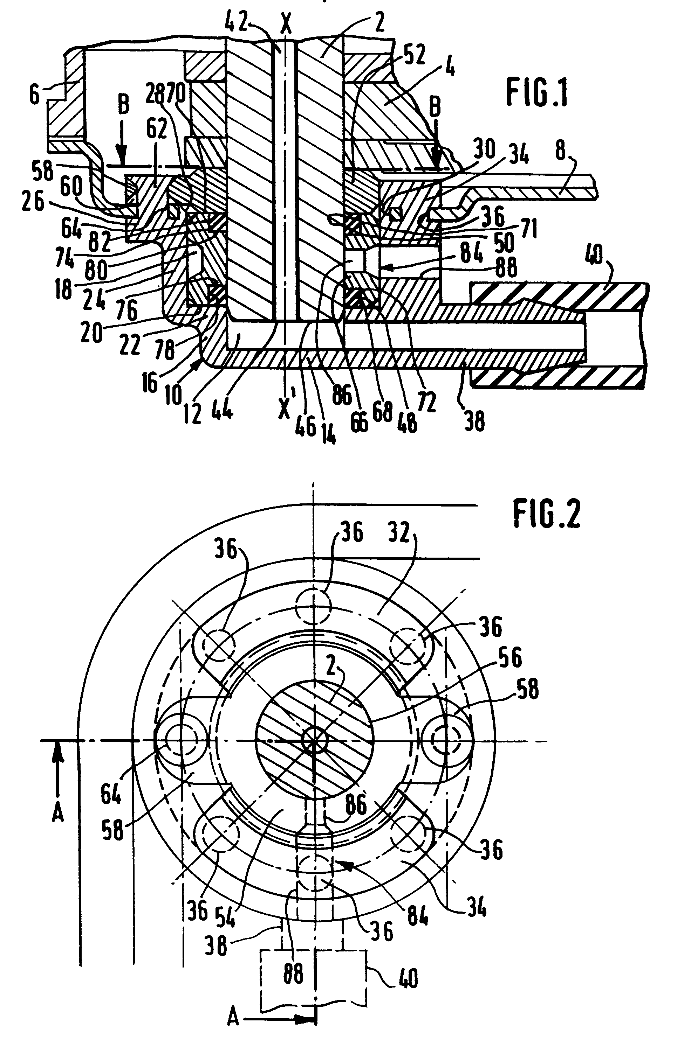

En se référant aux figures 1 et 2, un arbre de sortie 2 d'axe XX', servant d'arbre de commande à un bras d'essuie-glace (non représenté), fait partie d'un système réducteur 4 logé dans un carter 6 fermé par un couvercle 8.

Cet arbre de commande est relié, ici directement, à l'une de ses extrémités (non représentée) à un bras d'essuie-glace portant un balai d'essuie-glace apte à frotter sur une surface vitrée telle qu'un pare-brise de véhicule automobile.

L'autre extrémité de cet arbre traverse le couvercle de fermeture 8 pour aboutir dans une pièce tubulaire en forme de pot 10 coaxiale à l'axe XX' de l'abre.

Ce pot présente une première cavité 12 délimitée par un fond 14 et une paroi tubulaire 16 sensiblement orthogonale audit fond, cette première cavité se poursuit par une seconde cavité 18 de plus grand diamètre que la cavité 12 et délimitée par un épaulement 20 porté par une paroi radiale externe 22 sensiblement parallèle et à distance de la paroi de fond 14 et par une deuxième partie tubulaire 24 sensiblement orthogonale à la paroi radiale 22 tout en étant coaxiale à la paroi tubulaire 16.

La partie tubulaire 24 se termine par une collerette radiale extérieurement 26 disposée au voisinage de la face ouverte 28 du pot 10, cette collerette radiale servant de collerette d'appui de ce pot sur le couvercle 8, de manière à ce que la face ouverte 28 soit coaxiale à l'ouverture 30 prévue dans le couvercle 8 et à travers de laquelle se prolonge l'arbre de commande 2.

Comme visible sur les figures 1 et 2, le pot 10 est maintenu et fixé sur le couvercle 8 en concordance avec l'ouverture 30 par surmoulage de deux secteurs angulaires diamètralement opposés 32, 34 ces surmoulages provenant de la pénétration de la matière constitutive du pot 10 et plus particulièrement de la collerette 26 à travers des alésages 36 prévus à proximité de l'ouverture 30 du couvercle 8.

La cavité 12 précédemment décrite se poursuit radialement à partir de sa paroi tubulaire 16 par une tubulure d'admission 38 permettant le raccordement de la cavité 12 avec un tuyau souple 40 relié à un circuit de distribution de liquide de lave-glace de manière à ce que le liquide puisse traverser l'arbre de commande 2 par l'intermédiaire du canal 42 prévu coaxialement avec l'axe XX' de cet arbre, ledit canal débouchant à son embouchure 44 au niveau de l'extrémité libre 46 de l'arbre pénétrant légèrement à l'intérieur de la cavité 12.

Comme visible sur la figure 1, deux bagues d'étanchéité 48, 50 sont disposées à distance l'une de l'autre à l'intérieur du pot 10, ici à l'intérieur de la cavité 18.

La bague d'étanchéité inférieure 48 prend appui, d'une part sur l'épaulement 20 de la paroi radiale 22 et, d'autre part, sur la périphérie externe de l'arbre de commande 2 en se situant à proximité de l'extrémité 46 de l'arbre 2.

La bague d'étanchéité supérieure 50, située au voisinage du couvercle 8, prend appui, d'une part sur la périphérie externe de l'arbre 2 et, d'autre part, sur une plaque de fermeture 52 du pot 10.

Cette plaque de fermeture, en se référant à la figure 2, se compose d'un flanc circulaire évidé 54 dont l'évidement 56 coaxial correspond sensiblement au diamètre externe de l'arbre 2 qui le traverse, le diamètre extérieur de ce flanc circulaire 54 correspondant sensiblement au diamètre de la face ouverte 28 du pot 10.

Ce flanc circulaire 54 porte deux pattes de fixation 58, diamètralement opposées l'une à l'autre et portant chacune une ouverture 60 apte à coopérer avec une protubérance 62 issue de la collerette radiale 26 et traversant simultanément un perçage 64 prévu dans le couvercle 8 à distance de l'ouverture 30 du couvercle 8.

De manière préférentielle, la protubérance 62 est conformée en tant que rivet de manière à ce que cette protubérance traverse le perçage 64 et l'ouverture 60 et que son extrémité débouchant au-delà de l'ouverture 60 soit écrasée par tout moyen connu de manière à assurer la fixation de la plaque de fermeture 52 par rapport au pot 10.

Préférentiellement, et comme cela est visible sur la figure 1, les deux bagues d'étanchéité 48, 50 sont portées par une même pièce de support 66 logée à l'intérieur du pot, ici à l'intérieur de la cavité 18, en présentant sensiblement la même dimension que la dimension radiale de cette cavité et une hauteur telle que les faces d'extrémité 68, 70 s'appuient après, montage, respectivement sur l'épaulement 20 et sur la face de la plaque de fermeture 52 dirigée vers l'intérieur de la cavité, ladite pièce de support présentant un évidement traversant circulaire coaxial 71 correspondant au diamètre de l'arbre 2 qui traverse cet évidement.

La pièce de support 66 présente à partir de la face 68 un logement 72 pour la bague d'étanchéité 48 et à partir de sa face d'extrémité 70 un logement de réception 74 de la bague d'étanchéité 50.

Ainsi, après montage, la bague d'étanchéité 48 prend appui sur l'épaulement 20, la périphérie externe de l'arbre 2, le fond 76 du logement de réception 68 et la périphérie 78 de ce logement.

La bague d'étanchéité 50 prend appui, après montage, sur le fond 80 du logement de réception 74, la périphérie externe de l'arbre 2, la face inférieure de la plaque de fermeture 52 et sur la périphérie 82 du logement 50.

Ainsi, cette pièce de support 66 est utilisée en tant que moyen d'écartement des deux bagues d'étanchéité et présente en outre un passage de dépression 84 prévu entre les deux bagues d'étanchéité 48, 50 et constitué d'un alésage radial 86 mettant en communication l'évidement intérieur 71 de la pièce de support avec un alésage radial 88 prévu en correspondance dans la paroi tubulaire 24 du pot 10.

Grâce à ce dispositif, les deux bagues d'étanchéité sont supportées par une même pièce 66, cette pièce étant immobilisée dans la cavité 18 entre la plaque de fermeture 52 et l'épaulement 20 et de ce fait, lors du montage, l'arbre de commande 2 ne présente aucun obstacle tendant à faire sortir l'une des deux bagues d'étanchéité en dehors de leur logement.

De plus, en cas de dépression dans le volume creux du carter 6, cette dépression sera remédiée par la mise à l'air atomosphérique de ce carter via les alésages 86, 88.

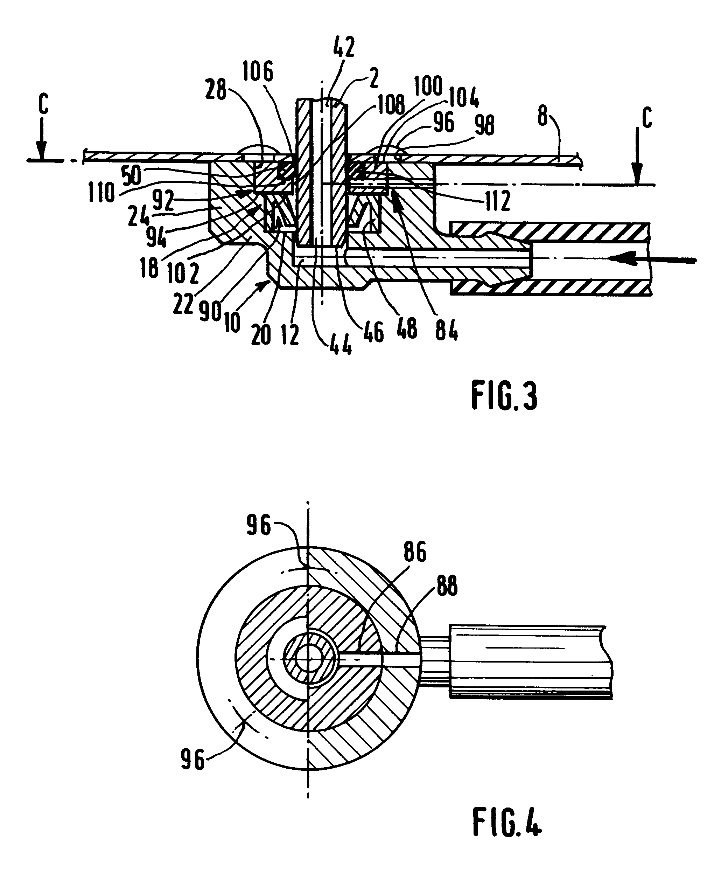

On se reporte maintenant aux figures 3 et 4 qui montrent une variante de réalisation de l'invention.

Dans cette variante, le pot 10 présente une première cavité 12 à l'intérieur de laquelle débouche l'extrémité 46 de l'arbre 2 et l'embouchure 44 du canal 42 et une deuxième cavité 18 se décomposant en une première partie 90 délimitée par l'épaulement 20 de la partie radiale 22 et par la paroi tubulaire 24 et par une deuxième partie 92 de cavité délimitée par un épaulement 94 et une paroi intérieure de la partie tubulaire de plus grand diamètre que la paroi tubulaire de la première partie de la cavité, la seconde partie de la cavité débouchant au niveau de la face ouverte 28 du pot 10.

Le pot est fixé sur le couvercle de fermeture 8 par tout moyen approprié et, comme représenté sur la figure 3 à titre d'exemple, comporte trois pions saillants 96, disposés circonférentiellement régulièrement l'un par rapport à l'autre, par exemple à 120°, et traversant des ouvertures 98 prévues en correspondance sur le couvercle 8 pour être ensuite écrasés à partir de la face supérieure de ce couvercle pour former ainsi une liaison fixe avec ce couvercle.

Comme visible sur la figure 3, deux bagues d'étanchéité 48, 50 sont logées à l'intérieur de la cavité 18.

Plus précisément, la bague 48 est logée dans la première partie de cavité 90 et la deuxième bague d'étanchéité est logée dans la seconde partie de cavité 92.

La première bague d'étanchéité, ici en forme de joint d'étanchéité à lèvres, s'appuie sur l'épaulement 20, la périphérie interne de la partie tubulaire 24, la périphérie externe de l'arbre de commande 2 et la face inférieure d'une coupelle de support 100 du joint d'étanchéité 50.

Cette coupelle est une coupelle de forme cylindrique dont la face d'extrémité 102 s'appuie sur l'épaulement 94 délimitant la première et deuxième parties de cavité, la partie périphérique correspond sensiblement au diamètre interne de la deuxième partie de cavité 92 et dont l'autre face d'extrémité 104 s'appuie sur le couvercle 8.

Cette coupelle 100 porte en outre coaxialement un logement de réception 106 pour la bague d'étanchéité 50, ce logement 106 se poursuivant coaxialement par un évidement 108 permettant le passage de l'arbre de commande 2 à travers cette coupelle.

Ainsi, comme mieux visible sur la figure 3, la bague d'étanchéité 50 s'appuie sur la périphérie externe de l'arbre 2, le fond 110 du logement 106, la surface périphérique interne 112 de ce logement et sur le couvercle de fermeture 8.

Un passage de dépression 84 est également prévu entre les deux bagues d'étanchéité 48, 50.

Ce passage de dégazage comprend un alésage radial 86 prévu dans la coupelle de support 100 entre le fond 110 et la face d'extrémitéb 102 et communiquant avec un alésage radial 88 prévu dans la partie tubulaire 24 de la deuxième cavité 18.

Ainsi, comme précédemment décrit, le montage du couvercle 8 portant le pot et les bagues d'étanchéité de manière fixe les unes par rapport aux autres ne procurera aucune difficulté et n'entraînera aucun démontage de l'une de ces bagues tout en autorisant également une mise à l'air libre de l'intérieur du volume du sytème réducteur en cas de dépression présente dans ce volume.

La présente invention n'est pas limitée aux exemples de réalisation décrits ci-dessus mais englobe toutes variantes.

Notamment, il peut être prévu que les bagues d'étanchéité soient de tout type actuellement utilisé dans le commerce tel que des bagues formant joint torique ou des bagues dont la section est sensiblement cruciforme.

## Revendications

1) Dispositif de lave-glace, notamment pour surface vitrée de véhicule automobile, comportant un arbre de commande (2) portant un canal (4) et dont l'une des extrémitéss (46) pénètre à étanchéité dans un élément en forme de pot (10) de manière à mettre en communication l'embouchure (44) dudit canal avec une tubulure d'admission (38) d'un liquide de lave-glace portée par ledit pot, caractérisé en ce que l'étanchéité est constituée de deux bagues d'étanchéité (48,50) logées à distance l'une de l'autre dans le pot (10).

2) Dispositif de lave-glace selon la revendication 1, caractérisé en ce que l'une des bagues d'étanchéité (48) est disposée à proximité du fond (14) du pot (10).

3) Dispositif de lave-glace selon l'une des revendications précédentes, caractérisé en ce que l'autre bague d'étanchéité (50) est logée à proximité du couvercle de fermeture (8).

4) Dispositif de lave-glace selon l'une des revendications précédentes, caractérisé en ce qu'au moins une bague (48,50) est supportée par une pièce de support (66,100) logée dans le pot (10).

**5)** Dispositif de lave-glace selon la revendication 4, caractérisé en ce que les deux bagues (48,50) sont portées par une même pièce de support (66).

**6)** Dispositif de lave-glace selon l'une des revendications précédentes, caractérisé en ce qu'un passage de dépression (84) est prévu entre les deux bagues d'étanchéité (48,50).

**7)** Dispositif de lave-glace selon la revendication 6, caractérisé en ce que le passage de dépression (84) comporte un alésage radial (86) dans la pièce de support (66,100) et un alésage radial (88) prévu dans le pot (10).

**8)** Dispositif de lave-glace selon l'une des revendications précédentes, caractérisé en ce que la pièce de support (66) est maintenue à l'intérieur du pot (10) par une plaque de fermeture (52).

**9)** Dispositif de lave-glace selon la revendication 8, caractérisé en ce que la plaque de fermeture (52) est fixée su le pot (10).

FIG.1

FIG.2

FIG.3

FIG.4

Office européen
des brevets

**RAPPORT DE RECHERCHE EUROPEENNE**

Numero de la demande

EP 92 40 0787

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | WO-A-9 010 562 (SWF)<br>* page 6, ligne 3 - page 9, ligne 15 *<br>* page 11, ligne 7 - page 13, ligne 25; figures 1-3,12-14 *<br>--- | 1-4,8,9 | B60S1/34 |
| D,A | FR-A-2 497 745 (BOSCH)<br>* le document en entier *<br><br>----- | 1-4,6 | |

**DOMAINES TECHNIQUES RECHERCHES (Int. Cl.5)**

B60S

Le présent rapport a été établi pour toutes les revendications

| Lieu de la recherche | Date d'achèvement de la recherche | Examinateur |
|---|---|---|
| LA HAYE | 30 JUIN 1992 | VERLEYE J. |